# EUROPEAN PATENT APPLICATION

(11) **EP 1 477 362 A1**
(43) Date of publication of application: **17.11.2004**
(21) Application number: 03447109.4
(22) Date of filing: 14.05.2003
(51) Int. Cl.: B60P 3/32, B62D 33/04, B62D 27/02

(54) **Recreational vehicle**

(71) Applicant: Chateau Caravans N.V., 3930 Hamont-Achel (BE)
(72) Inventor: Broers, Jacob, 3910 Sint-Huibrechts-Lille (BE)
(74) Representative: Van Reet, Joseph

(57) **Abstract**

The front, the back and/or the roof of the vehicle comprises a plastic plate (6) which has two side edges secured to the side walls (2) by being clamped underneath a clamp profile (10) with a resilient seal (14) being provided between the clamp profile (10) and the side edge of the plastic plate (6). The clamp profile (10) is not used as such but is part of an assembly which further comprises a base profile (9) which is fixed to the side walls (2). The base profile (9) comprises a generally L-shaped portion, a first leg (18) of which extends along an edge surface (13) of the side wall (2) and a second leg (19) of which extends along an outer surface of the side wall (2). The mounting assembly comprises means which are arranged next to the side edge of the plastic plate (6) for mounting the clamp profile (10) onto the base profile (9) to clamp the side edge of the plastic plate (6) between the clamp profile (10) and the first leg (18) of the base profile (9). In this way the problem of tear formation in the plastic plate as a result of being exposed to varying temperatures is solved.

## Description

The present invention relates to a recreational vehicle, such as a caravan, a mobile home or a motor caravan, comprising a living room and a kitchen and having two side walls and a front, a back and a roof fixed to the side walls, the side walls showing a contour which comprises at least one curved portion in the area where the front, the back and the roof are fixed to the side walls, and the front, the back and/or the roof comprising at least one plastic plate which extends between the side walls and which has two side edges, at least one of which is secured to one of said side walls by being clamped underneath a clamp profile secured to said side wall along at least a portion of the contour thereof which comprises at least said curved portion, the clamp profile being bent along said curved portion and a resilient seal being provided between the clamp profile and the side edge of the plastic plate.

In practice, the clamp profiles of a caravan extend over the entire area of the contour of the side walls where the front, the roof and the back are fixed to the side walls. The clamp profiles are generally L-shaped and have one leg applied onto the side edge of the plates which form the front, the roof and the back and the other leg onto the outer surface of the side wall. In this way, an aesthetic covering of the transition of the edge between the side walls and the front, the roof and the back is achieved. Moreover, a resilient seal is applied between the clamp profiles and the side edges of the plates forming the front, the roof and the back so that a watertight seal is obtained. In order to secure the clamp profiles to the side wall, use is made of self tapping screws which are screwed through the clamp profiles and the side edges of the plates forming the front, the roof and the back into the edge surfaces of the side walls.

When use is made of metal plates, such as sheet aluminium, for making the front, the roof and the back of the recreational vehicles, the finishing of the edge around the side walls with the above described clamp profiles was quite satisfying and offered no problems. However, as from the seventies, use was made more and more of moulded plastic plates, especially for the front of recreational vehicles, in order to be able to render them more aerodynamic and also more aesthetic. The plastic plates are more particularly moulded from synthetic materials like ABS and polyester. A drawback of the use of moulded plastic plates has been from the beginning that, after some time, most of the plastic plates showed tears at the locations where they were screwed to the side walls resulting in a lot of damage claims. In practice, the vehicle constructors have asked the manufacturers of the plastic plates for plates of a better quality but up to now the problem of the tear formation could not be solved in this way. Consequently, the problem of tear formation remains a major problem for the constructors.

In DE-U-201 17 226 a clamp profile is described which enables to fix certain applications, for example a plastic bottle box, to the outside of a caravan. In order to avoid the formation of tears in the side edges of these applications, these side edges are no longer clamped underneath the clamp profiles but these clamp profiles are provided on top with a rail showing an upwardly directed channel wherein the edge of the application is inserted. For fixing the edge of the application, the channel is provided with an undercut and the outer wall of the channel is deformed to close the opening and to fit against the application. A drawback of such a mounting system is that the application cannot be fixed very securely. Moreover, the required watertight seal cannot be achieved between the rail and the application so that a watertight wall has still to be provided underneath or behind the application. A further drawback is that only applications having an edge curved over an angle can be fixed into the rail. In other words, it is not possible to fix a flat plastic plate, for example a roof plate, or an application showing an edge which is locally flat into the rail. Consequently, it is very difficult to achieve a watertight transition between the application having curved edges and the adjacent flat plates. Again, this means that a watertight flat wall has to be provided underneath or behind the application.

An object of the present invention is now to provide a new recreational vehicle wherein at least one of the side edges of the plastic plate forming a portion of the front, the roof and/or the back is rigidly fixed to the side wall by being clamped underneath a clamp profile and wherein a watertight seal is still obtained between the plastic plate and the clamp profile but wherein the problem of the tear formation in the plastic plate is avoided at least to a considerable extend.

To this end the vehicle according to the invention is characterised in that said clamp profile is part of an assembly for mounting the plastic plate to said side wall, which mounting assembly further comprises at least a base profile which is fixed to the side wall along said portion of the contour thereof and which is bent along said curved portion of this contour, the base profile comprising a generally L-shaped portion, a first leg of which extends along an edge surface of the side wall and a second leg of which extends along an outer surface of the side wall, and the mounting assembly comprising means, arranged next to the side edge of the plastic plate, for mounting the clamp profile onto the base profile to clamp the side edge of the plastic plate between the clamp profile and said first leg of the base profile.

According to the invention, the plastic plate is rigidly fixed to the side wall by being clamped between the clamp and the base profiles and a watertight seal is achieved at the same time by providing a resilient seal between the clamp profile and the side edge of the plastic plate. In this way, no further watertight wall has to be provided behind or underneath the plastic plate. Since the base profile is situated underneath the side edge of the plastic plate, it can be fixed to the side wall without having to use screws penetrating the side edge of the plastic plate. Also for mounting the clamp profile onto the base profile, the edge of the plastic plate has not to be penetrated since the mounting means used herefor are arranged next to the side edge of the plastic plate. It has further been found that, due to the fact that the plastic plate is only fixed by being clamped between the base profile and the clamp profile, the formation of tears is avoided at least to a considerable extent, even when the recreational vehicle is subjected to various temperatures and the clamp and the base profiles and the plastic plates are made of materials having quite different thermal expansion coefficients such as aluminium and ABS.

The plastic plates used in the vehicle according to the invention have usually side edges with a thickness comprised between 1 and 5 mm, more particularly between 1 and 3 mm whilst the metal (aluminium) plates which may also be used in addition to the plastic plates have usually a thickness of between 0.5 and 1 mm. A mounting assembly comprising a base profile and a clamp profile for mounting a thicker roof panel onto the side walls is already disclosed in DE-A-43 34 269. The base and the clamp profiles are however not suitable for a recreational vehicle according to the invention since they cannot be bent around the rounded corners and since the roof panel has further to be glued first to the clamp profile. The roof panel has consequently to be a flat panel.

In a preferred embodiment of the vehicle according to the invention, said clamp profile and said base profile have a height, measured in a direction parallel to the side wall and perpendicular to the contour thereof, which is smaller than 25 mm, and preferably smaller than 20 mm.

An advantage of this embodiment is that the base and the clamp profiles does not have to be pre-shaped but that they can be bent manually when fixing them to the side wall.

Other particularities and advantages of the invention will become apparent from the following description of some particular embodiments of the vehicle according to the present invention and in particular of the mounting assembly used therein. The reference numerals used in this description relate to the annexed drawings wherein:
Figure 1 is a schematic perspective view on a caravan;
Figure 2 is a cross-sectional view of a prior art clamp profile running along the edges of the side walls of a caravan;
Figure 3 is a cross-sectional view of a mounting assembly used in a caravan according to the invention to fix the plates forming the front, the roof and the back of a caravan to the side walls; and
Figures 4, 5 and 6 are cross-sectional views of alternative embodiments of the mounting assembly illustrated in Figure 3.

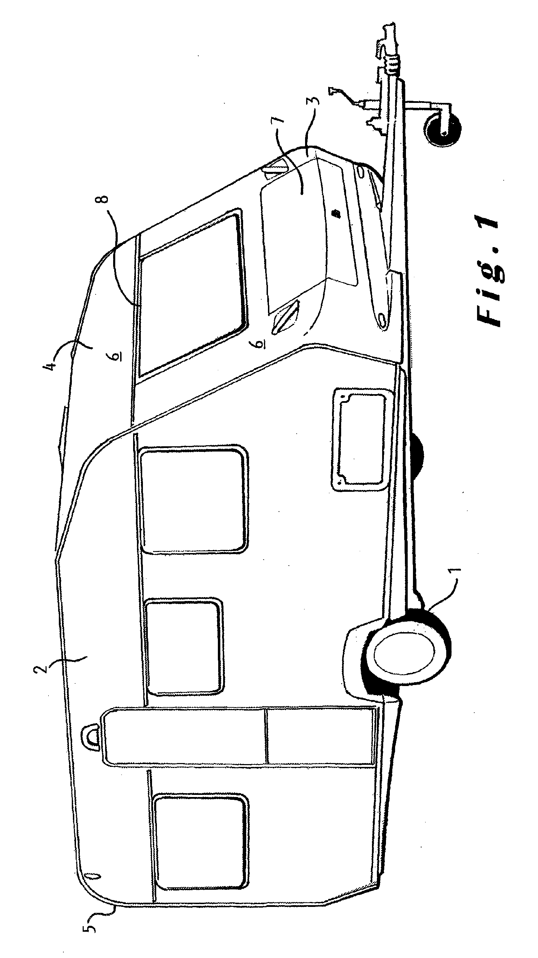

The invention relates to a recreational vehicle such as a caravan, a mobile home or a motor caravan, comprising a living room and a kitchen. The caravan illustrated in Figure 1 comprises a chassis with wheels 1 and a floor mounted thereon, two side walls 2, a front 3, a roof 4 and a back 5. The front 3, roof 4 and back 5 are made of plastic plates 6 which have side edges fixed to the side walls 2. As can be seen, the front 3 of the caravan consists of a moulded plastic plate 6 having an aerodynamic and aesthetic shape and providing a box 7 for a gas bottle or for other equipment. The front is usually made of ABS but could also be made of other synthetic materials like polyester. The roof 4 and the back 5 consist on the contrary of a flat plate 6 which may be made of a synthetic material like polyester but which can also be made of a metal like aluminium. Between the front 3 and the roof a strip 8 is arranged which provides for a watertight connection.

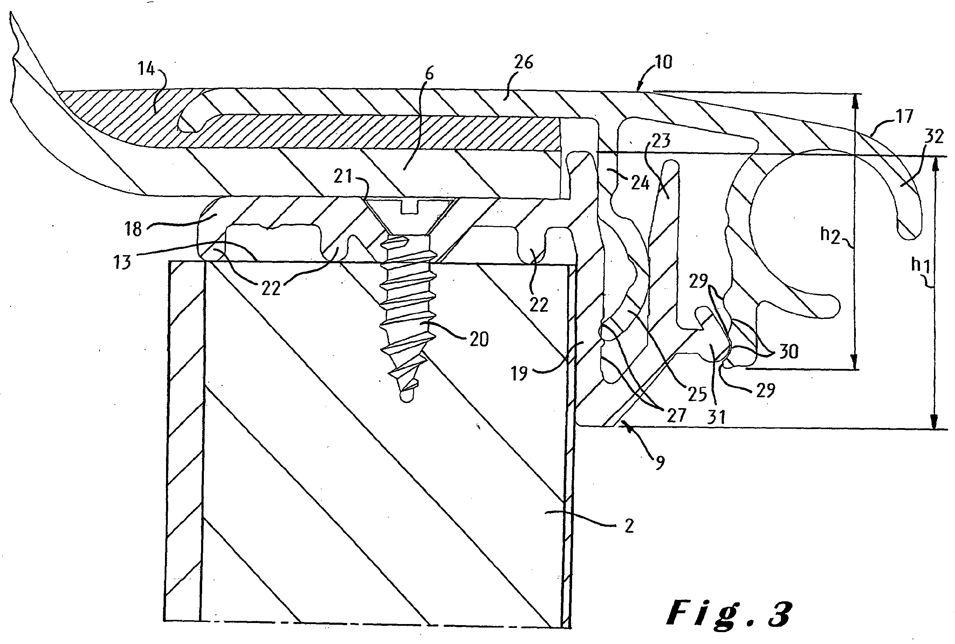

As can be seen in Figure 1, the side walls 2 of the caravan shows a contour which comprises curved portions in the area where the front 3, the roof 4 and the back 5 are fixed to the side walls 2. The front, the roof and the back are fixed to the side walls by means of a mounting assembly which extends in one piece in this area around the contour of the side walls. According to the invention, and as can be seen in Figures 3 to 6, the mounting assembly comprises two profiles which are mounted onto one another, namely a base profile 9 and a clamp profile 10 mounted thereon. In the area of the curved portions of the side wall contour, these profiles 9, 10 are bent to follow the contour of the side wall 2. Usually, the contour of the side walls shows curved portions having a curvature radius which is smaller than 100 cm and in particular smaller than 50 mm so that a substantial bending of the profiles is required. The curvature radius of the curved portions of the side wall contour are however usually larger than 15 cm, and in particular larger than 20 cm, when use is made of profiles which are bent around the contour of the side wall. In order to enable to bend the profiles easily by hand according such curvature radii, the profiles 8, 9 have preferably a height h₁, h₂, measured in a direction parallel to the side wall 2 and perpendicular to the contour thereof, which is smaller than 25 mm and preferably smaller than 20 mm.

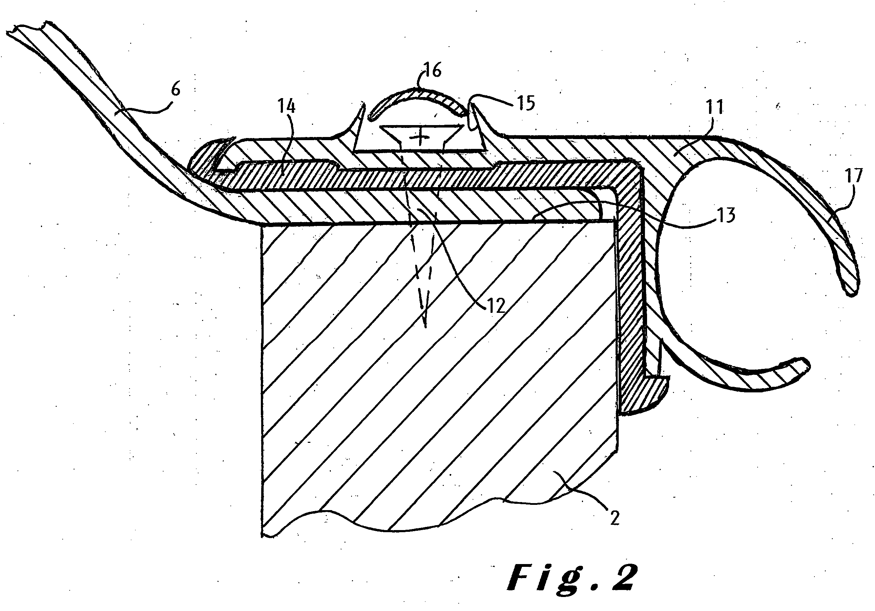

In Figure 2 a prior art assembly for mounting the plates 6 of the front 3, the roof 4 and the back 5 of the caravan onto the side walls 2 is illustrated. This prior art mounting assembly consists of a clamp profile 11 which is fixed by means of self tapping screws 12 to an edge surface 13 of the side wall 2. The side edges of the front, roof and back plates are arranged between the clamp profile 11 and the edge surface 13 and are penetrated by the screws 12. Between the side edges and the clamp profile 11 a resilient seal 14, in particular a rubber seal, is provided to achieve a watertight seal. The clamp profile 11 shows a groove 15 for the heads of the screws, which groove 15 is closed by means of a finishing strip 16. The clamp profile 11 ensures a reliable fixation of the front, roof and back plates, and provides for a watertight sealing and for an aesthetic finishing of the contour of the side wall 2. As illustrated in Figure 2, the clamp profile 11 may also comprise a rail 17 for attaching a tent. Notwithstanding the fact that the prior art clamp profile 11 fulfilled these functions in a very satisfying way, a major drawback is that when plastic plates 6 are used for the front, the roof and/or the back, tears are produced very often in these plates 6 due to the difference in thermal expansion coefficient between the plastic plates and the metal (extruded aluminium) of the profile 11 and the material of the side wall 2 (usually a wooden frame filled with an insulating foam material and covered with a sheet material such as plywood on the inside and aluminium or polyester on the outside).

In order to avoid or reduce the risk on the formation of tears in the side edges of the plastic plates 6 a new mounting assembly is provided by the invention comprising a base profile 9 and a clamp profile 10. A first embodiment of this mounting assembly is illustrated in Figure 3. As can be seen in this figure, a same plastic plate 6 as illustrated in Figure 2, namely a moulded plastic plate 6 having a convex surface and substantially flat side edges, is clamped in the same way as in Figure 2 underneath the clamp profile 10, including a resilient seal 14 between the clamp profile 10 and the side edge of the plate 6, so that the same advantages are achieved. However, an essential difference is that the edges of the plastic plate 6 are now clamped between the clamp profile 10 and a base profile 9 and that the clamp profile 10 is no longer fixed by means of screws penetrating the plastic plate 6 but it is mounted onto the base profile 9 by means of mounting means which are arranged next to the side edge of the plastic plate 6.

The base profile 9 of the mounting assembly illustrated in Figure 3 comprises a generally L-shaped portion having a first leg 18 and a second leg 19. The first leg 18 of the base profile 9 is fixed by means of screws 20 to the edge surface 13 of the side wall 2, more particularly in such a manner that the second leg 19 engages the outer surface of the side wall 2. In order to have a flat upper surface, a groove 21 is provided in the upper side of the first leg 18 for receiving the heads of the screws 20 and, on the lower side, ridges 22 to compensate for the depth of the groove 21. Instead of, or in addition to, being fixed with screws 20, the base profile 9 could also be glued or adhered to the side wall 2.

For being able to mount the clamp profile 10 onto the base profile 9, the base profile 9 comprises a channel 23 which has its open end directed towards the clamp profile 10 and this clamp profile 10 comprises a flange 24 arranged to be clamped into the channel 23. The flange 24 comprises a C-shaped portion 25 which is compressed to clamp the flange in the channel 23. The flange 24 extends downward from a base portion 26 of the clamp profile so that, when pushing the flange 24 in the channel 23, the side edge of the plate 6 and the seal 14 applied thereon are clamped between this base portion 26 and the upper surface of the first leg 18 of the base profile 9. In order to secured the flange 24 even better in the channel 23, the inner surface of the channel 23 is provided with a number of grooves 27. Since the channel 23 extends on the outer side of the second leg 19 of the base profile 9, the side edge of the plate 6 has not to be penetrated by any fixing means.

In the embodiment illustrated in Figure 3, the channel 23 extends at least partially along or in other words next to the second leg 19 of the base profile 9, in a direction perpendicular to the outer surface of the side wall 2, the second leg 19 forming more particularly a portion of a side wall of the channel 23. An important advantage of this embodiment is that the height h₁ of the base profile can be kept relatively small so that the base profile can be bent by hand according to the outer contour of the side wall 2.

In order to be able to increase the force the side edge of the plate 6 is clamped with between both profiles 9, 10, the base portion 26 of the clamp profile 10 is provided with a further flange 28 which extends along the outer side of the channel 23 of the base profile 9 and which is urged laterally against this base profile 9 when the plate 6 is clamped between the clamp profile and the base profile so that the base portion of the clamp profile 10 tends to rotate somewhat around the flange 24. Preferably, the further flange 28 and/or the base profile 9 are provided with means for prevention a sliding of the further flange 28 with respect to the base profile. In the embodiment illustrated in Figure 3, these means comprise ridges 29 forming grooves 30 in the further flange 28 and one larger ridge 31 to the base profile 9, having a rounded head which penetrates into the grooves 30. The ridges and grooves prevent a sliding of the further flange 28 of the clamp profile 10 with respect to the base profile 9 under the normal conditions of use but still enable a mutual sliding of these elements when the clamp profile is mounted on or removed from the base profile (to enable repair).

In the embodiment illustrated in Figure 3, the further flange 28 is part of a rail 32 arranged to attach a tent to the caravan. Such a rail is however usually only provided on one side of the caravan so that the clamp profile used on the other side does not have to show such a rail.

An important advantage of the mounting assembly illustrated in Figure 3 is that, due to the presence of ridges/grooves in the channel 23 and on the further flange 28, the clamp profile can be fixed on different distances from the base profile. In this way, the mounting assembly is suited for clamping plates of different thicknesses, for example thicker plastic plates and thinner aluminium plates.

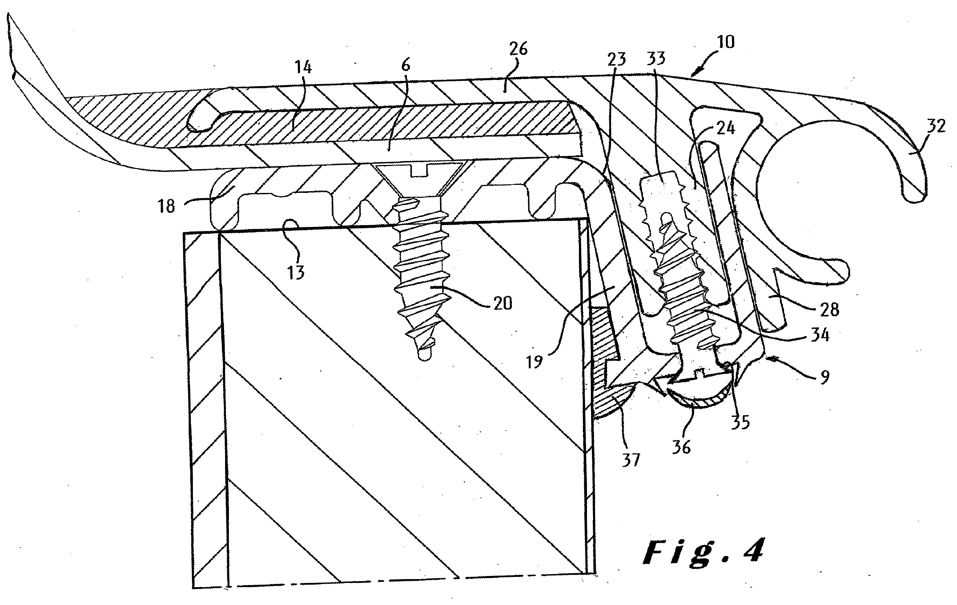

Figure 4 illustrates an alternative embodiment of the mounting assembly which also allows to clamp plates of different thicknesses. In this embodiment, a resilient seal 37 is additionally provided between the second leg 19 of the base profile 9 and the outer surface of the side wall 2. The main difference between the previous embodiment is further that the flange 24 which extends in the channel 23 of the base profile 9, is replaced by a thicker flange 24 showing a channel 33 having a ridged inner surface and an open end directed towards the bottom of the channel 23 in the base profile 9. Instead of being clamped into the channel 23, the flange 24 is now fixed into this channel by means of screws 34 which are screwed through the bottom of the channel 23 into the channel 33 in the flange 24. The heads of the screws 34 are situated in a groove 35 which is closed of by means of a finishing strip 36. Due to the fact that the flange 24 of the clamping profile 10 can be made thicker in the present embodiment, the further flange 28 can be omitted.

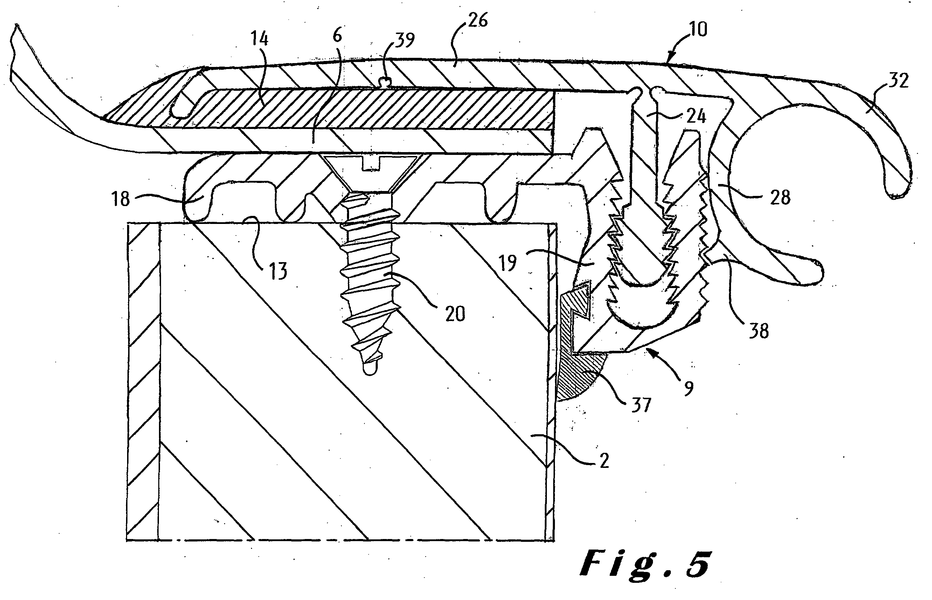

Figure 5 illustrates a further alternative embodiment of the mounting assembly illustrated in Figure 3. In this embodiment, a resilient seal 37 is also additionally provided between the second leg 19 of the base profile 9 and the outer surface of the side wall 2. Moreover, the flange 24 projecting from the base portion of the clamp profile 10 has two ridged outer surfaces, the ridges forming is cross-sectional view saw teeth, having one oblique edge and one perpendicular edge. The outer surface of the base profile is also ridged whilst the further flange 28, more particularly the tent rail 32, is provided with a ridge 38 arranged to penetrate in the grooves formed by the ridged outer surface of the base profile. A special feature is further that the base portion of the clamp profile 10 is somewhat buckled above the side edge of the plate 6, and shows a weakening groove 39, so that the curved free extremity of the clamp profile 10 can be clamped with a greater force against the resilient seal 14.

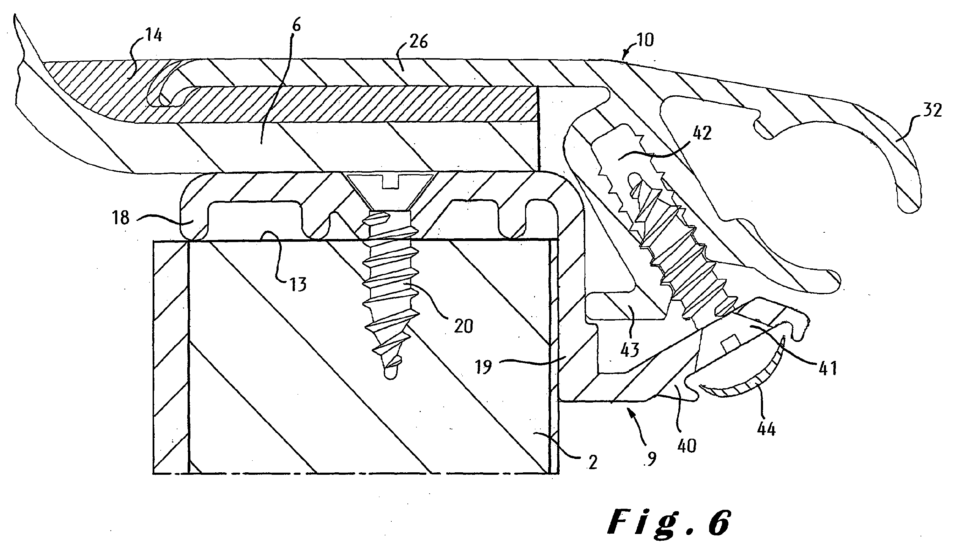

Figure 6 illustrates an alternative embodiment of the mounting assembly wherein the base profile 9 is not provided with a channel 23 for receiving a flange 24 of the clamp profile 10. Instead, the second leg 19 of the base profile 9 is provided with a outwardly projecting flange 40. This flange 40 is provided with holes for screws 41 which can be screwed in a channel 42 formed by the clamp profile 10 and having its open end directed towards the base profile 9, more particularly towards the projecting flange 40 thereof. To achieve a strong fixation, the inside wall of the channel 42 is provided with an inwardly projecting flange 43 which engages the base profile 9, more particularly the second leg 19 thereof, whilst the channel 42 and the longitudinal axes of the screws 41 form an angle with the outer surface of the side wall 2 so that the clamp profile 10 is prevented from rotating (in the clockwise direction as seen in Figure 6) when the plate 6 is clamped underneath the clamp profile 10. To withdraw the heads of the screws 41 from view, a groove is provided in the projecting flange 40 of the base profile 9, which groove is closed off by means of a finishing strip 44.

From the above description of some preferred embodiments it will be clear that many modifications could be applied thereto provided they still fall within the scope of the annexed claims.

It is for example possible to apply a resilient seal, similar to the seal illustrated in Figure 2, between the base profile 9 and the edge surface 13 of the side wall 2. In order to facilitate the positioning of the plate 6 onto the base profile 9, a double-sided adhesive tape can further be applied onto the first leg 18 of the base profile 9 so that the plate 6 adheres thereto when the clamp profile is applied. In order to achieve an even better sealing between the clamp profile 10 and the plate 6, a sealant/adhesive material (which preferably remains somewhat flowable) can first be applied onto the side edge of the plate 6 before applying the resilient seal thereto.

## Claims

1. A recreational vehicle, such as a caravan, a mobile home or a motor caravan, comprising a living room and a kitchen and having two side walls (2) and a front (3), a back (5) and a roof (4) fixed to the side walls, the side walls (2) showing a contour which comprises at least one curved portion in the area where the front, the back and the roof are fixed to the side walls, and the front, the back and/or the roof comprising at least one plastic plate (6) which extends between the side walls (2) and which has two side edges, at least one of which is secured to one of said side walls (2) by being clamped underneath a clamp profile (10) secured to said side wall (2) along at least a portion of the contour thereof which comprises at least said curved portion, the clamp profile (10) being bent along said curved portion and a resilient seal (14) being provided between the clamp profile (10) and the side edge of the plastic plate (6), **characterised in that** said clamp profile (10) is part of an assembly for mounting the plastic plate (6) to said side wall (2), which mounting assembly further comprises at least a base profile (9) which is fixed to the side wall (2) along said portion of the contour thereof and which is bent along said curved portion of this contour, the base profile (9) comprising a generally L-shaped portion, a first leg (18) of which extends along an edge surface (13) of the side wall (2) and a second leg (19) of which extends along an outer surface of the side wall (2), and the mounting assembly comprising means, arranged next to the side edge of the plastic plate (6), for mounting the clamp profile (10) onto the base profile (9) to clamp the side edge of the plastic plate (6) between the clamp profile (10) and said first leg (18) of the base profile (9).

2. A vehicle according to claim 1, **characterised in that** said clamp profile (10) and said base profile (9) have a height (h₁, h₂), measured in a direction parallel to the side wall (2) and perpendicular to the contour thereof, which is smaller than 25 mm, and preferably smaller than 20 mm.

3. A vehicle according to claim 1 or 2, **characterised in that** said mounting means comprise, on the one hand, a channel (23) which is formed by the base profile (9) and which has an open end directed towards the clamp profile (10), and, on the other hand, a flange (24) formed by the clamp profile (10) and extending from a base portion (26) of the clamp profile (10) into said channel (23), which channel (23) extends at least partially along said second leg (19) of the base profile, the second leg (19) forming in particular at least a portion of a side wall of said channel (23).

4. A vehicle according to claim 3, **characterised in that** said flange (24) is clamped in said open channel (23).

5. A vehicle according to claim 3 or 4, **characterised in that** said open channel (23) has an inner surface which shows a number of grooves (27) which are arranged to co-operate with said flange (24) to enable to hold it in place in different positions.

6. A vehicle according to any one of the claims 3 to 5, **characterised in that** said channel (23) has a bottom through which screws (34) are screwed into said flange (24) to clamp the side edge of the plastic plate (6) between the clamp profile (10) and the base profile (9).

7. A vehicle according to any one of the claims 3 to 6, **characterised in that** said base portion (26) of the clamp profile (10) is provided, at the side of said flange (24) opposite the side where the plastic plate (6) is clamped between the clamp profile (10) and the base profile (9), with a further flange (28) which extends along an outer side of said channel (23) and which is urged laterally against the base profile (9), the base profile (9) and/or the further flange (28) having preferably means, in particular ridges (29, 31), for preventing a sliding of the further flange (28) with respect to the base profile (9).

8. A vehicle according to claim 1 or 2, **characterised in that** said mounting means comprise threaded screws (41) and a channel (42) having a ridged inner surface to complement the threads on the threaded screws (41), the channel (42) being formed by the clamp profile (10) and having its open end directed towards the base profile (9), and the threaded screws (41) being screwed through the base profile (9) into the channel (42) of the clamp profile (10).

9. A vehicle according to any one of the claims 1 to 8, **characterised in that** the base profile (9) is screwed underneath the side edge of the plastic plate (6) onto the edge surface (13) of the side wall (2).

10. A vehicle according to any one of the claims 1 to 9, **characterised in that** the clamp profile (10) and the base profile (9) are bent in said curved portion according to a curvature radius which is smaller than 100 cm and in particular smaller than 50 cm, the clamp profile (10) and the base profile (9) being bent in said curved portion preferably according to a curvature radius which is larger than 15 cm and in particular larger than 20 cm.
